# EUROPÄISCHE PATENTSCHRIFT

(11) **EP 3 833 576 B1**
(45) Veröffentlichungstag und Bekanntmachung des Hinweises auf die Patenterteilung: **26.04.2023**
(21) Anmeldenummer: 19749238.2
(22) Anmeldetag: 18.07.2019
(51) Int. Cl.: B60R 1/00

(54) **KAMERAÜBERWACHUNGSSYSTEM**
SURVEILLANCE CAMERA SYSTEM
SYSTEME DE CAMERA DE SURVEILLANCE

(30) Priorität: 06.08.2018 DE 102018119024
(43) Veröffentlichungstag der Anmeldung: 16.06.2021
(73) Patentinhaber: KNORR-BREMSE Systeme für Nutzfahrzeuge GmbH, 80809 München (DE)
(72) Erfinder: TIHANYI, Viktor, 1032 Budapest (HU); NEMETH, Huba, 1116 Budapest (HU); BALOGH, Levente, 2310 Szigetszentmiklós (HU); SZÖLLOSI, Adam, 1119 Budapest (HU); GAL, Balazs, 1036 Budapest (HU)
(86) Internationale Anmeldenummer: PCT/EP2019/069420
(87) Internationale Veröffentlichungsnummer: WO 2020/030406

(56) Entgegenhaltungen:
- EP-A1- 3 106 349
- DE-A1-102017 010 956
- US-A1- 2017 217 369

## Beschreibung

Die vorliegende Erfindung bezieht sich auf ein Kameraüberwachungssystem und auf ein Verfahren zur Unterstützung eines Fahrerassistenzsystems oder eines autonomen Fahrens und insbesondere auf eine Kameraanordnung zum Ersetzen üblicher Spiegel an Nutzfahrzeugen.

Die kontinuierliche Verbesserung der Videosensortechnologie und der visuellen Darstellungsmöglichkeiten erlaubt es, bekannte Geräte der indirekten Sichtdarstellung in Fahrzeugen zunehmend zu ersetzen. So kommen statt der traditionellen Spiegel zunehmend Kameraüberwachungs- oder Kameraanzeigesysteme zum Einsatz, die die Spiegel ersetzen und eine höhere visuelle Qualität einschließlich zusätzlicher Funktionalitäten wie beispielsweise ein Zoomen oder von überlagerten Darstellungen auf Anzeigen ermöglichen. Ein weiterer Vorteil von Kameraüberwachungssystemen besteht darin, dass die genutzten Kameras relative klein sind und sich daher der Luftwiderstand verringert. Die ansonsten genutzten Rückspiegel bieten wegen ihrer Größe eine beträchtliche Windangriffsfläche und verursachen somit einen deutlich höheren Verbrauch an Kraftstoff.

Bekannte Kameraüberwachungssysteme sind beispielsweise in US 2017/274827 A1 und in US 2014/132770 A1 beschrieben. Die dort beschriebenen Systeme erlauben zwar das Ersetzen von Spiegeln durch Kameras, jedoch wird eine Fahrzeug-zu-Fahrzeug-Kommunikation genutzt, um zuverlässige Erfassung der rückwärtigen Umgebung zu erhalten, oder es sind mechanische Gelenke notwendig, um verschiedene Bereiche (Vorderbereich, Rückbereich) gleichzeitig abdecken zu können. Diese Systeme sind gar nicht oder nur begrenzt im Nutzfahrzeugbereich einsetzbar, da bei Nutzfahrzeugen in Regel keine Möglichkeit der visuellen Kontrolle durch den Fahrer besteht. Die DE 10 2017 010956 A1 offenbart eine konventionelle Vorrichtung zur Ausgabe von Umgebungsinformationen für ein Fahrzeug mit einer Erfassungsvorrichtung zur Erfassung der Umgebungsinformationen und einer optischen Ausgabevorrichtung zur Ausgabe der erfassten Umgebungsinformationen.

Daher besteht ein Bedarf nach einem Kameraüberwachungssystem, die ein hohes Maß an Flexibilität und Sicherheit bei der Umgebungserfassung bieten, um so Rückspiegel - insbesondere in Nutzfahrzeuge - ersetzen zu können.

Zumindest ein Teil dieser Probleme wird durch ein Kameraüberwachungssystem nach Anspruch 1, ein Nutzfahrzeug nach Anspruch 8 und ein Verfahren nach Anspruch 9 gelöst. Die abhängigen Ansprüche definieren weitere vorteilhafte Ausführungsformen der Gegenstände der unabhängigen Ansprüche.

Die vorliegende Erfindung bezieht sich auf ein Kameraüberwachungssystem nach Anspruch 1.

Das Kameraüberwachungssystem ist insbesondere ein Kameraanzeigesystem, das geeignet ist, um vorhandene Rückspiegel an einem Nutzfahrzeug zu ersetzen. Es ist daher für eine seitliche Bilderfassung ausgelegt, um eine seitliche und rückwärtige Umgebung des Fahrzeuges bildlich zu erfassen. Es versteht sich, dass Ausführungsbeispiele nicht auf die Anwendung in speziellen Fahrzeugen wie Nutzfahrzeuge eingeschränkt sein sollen. Das Kameraüberwachungssystem kann beliebige Fahrzeuge genutzt werden.

Der erste Bodenbereich kann wie folgt definiert werden: Er beginnt mit einer ersten Linie, die sich senkrecht zu einer Bewegungsrichtung des Nutzfahrzeuges erstreckt und um 4 m von einer Position eines Fahrzeugführer (oder dessen Augenpunkte) nach hinten versetzt ist, und erstreckt sich mit einer variablen Breite seitlich parallel zu einem Fahrzeugrand (Fahrerseite oder Beifahrerseite) nach hinten, wobei die variable Breite bis zu einem Abstand von 26 m von der ersten Linie nach hinten linear von 1 m auf eine Breite von 5 m zunimmt und dann konstant bleibt.

Der zweite Bodenbereich kann wie folgt definiert werden: Er beginnt mit einer zweiten Linie, die sich senkrecht zu einer Bewegungsrichtung des Nutzfahrzeuges erstreckt und um 1,5 m von einer Position eines Fahrzeugführer (oder dessen Augenpunkte) nach hinten versetzt ist, und erstreckt sich mit einer variablen Breite seitlich parallel zu einem Fahrzeugrand (Fahrerseite oder Beifahrerseite) auf eine Länge von 23,5 m nach hinten, wobei die variable Breite bis zu einem Abstand von 8,5 m von der zweiten Linie linear von 4,5 m auf eine Breite von 15 m zunimmt und dann konstant bleibt.

Der erste und zweite Bodenbereich kann sich beidseitig von dem Fahrzeug erstrecken, wobei die Erfassungseinheit in der Regel nur eine Seite erfassen wird. Die Begriffe "vorne" oder "vordere" und "hinten" auf eine normale Fahrtrichtung des Fahrzeuges, d.h. "vorne" oder "vordere" ist in Richtung der normalen Vorwärtsfahrt des Fahrzeuges.

Erfindungsgemäss umfasst die Bilderfassungseinheit nach Anspruch 1 die folgenden Kameraeinheiten:
- eine erste Kameraeinheit mit einem Weitwinkelobjektiv oder einem Fischaugenobjektiv, um bei Anbringung an einem vorderen Eckbereich des Nutzfahrzeuges auf der Beifahrerseite gleichzeitig einen Vorderbereich vor dem Nutzfahrzeug, den ersten Bodenbereich, den zweiten Bodenbereich und einen dritten Bodenbereich zu erfassen;
- eine zweite Kameraeinheit zur Erfassung von Bilddaten auf einer Beifahrerseite des Nutzfahrzeuges;
- eine dritte Kameraeinheit zur Erfassung von Bilddaten auf einer Fahrerseite des Nutzfahrzeuges;
- eine vierte Kameraeinheit mit einem Weitwinkelobjektiv oder einem Fischaugenobjektiv, um bei Anbringung an einem vorderen Eckbereich des Nutzfahrzeuges auf der Fahrerseite gleichzeitig den Vorderbereich, den ersten Bodenbereich, den zweiten Bodenbereich und einen dritten Bodenbereich zu erfassen.

Die zweite Kameraeinheit und dritte Kameraeinheit sind beispielsweise ausgebildet, um Bilddaten von einem (rückwärtigen) Seitenbereich auf einer Fahrerseite bzw. Beifahrerseite des Fahrzeuges zu erfassen (z.B. den Sichtbereich eines konventionellen Rückfahrspiegels).

Der dritte Bodenbereich kann wie folgt definiert werden: Er beginnt mit einer dritten Linie, die sich senkrecht zu einer Bewegungsrichtung des Nutzfahrzeuges durch eine Position eines Fahrzeugführers (oder dessen Augenpunkte) verläuft, und erstreckt sich 1,75 m nach hinten und 1 m nach vorne auf einer Breite von 2 m parallel zu einem Fahrzeugrand (Fahrerseite oder Beifahrerseite). Der dritte Bodenbereich befindet sich somit im Wesentlichen neben der Fahrerkabine des beispielhaften Nutzfahrzeuges.

Der Vorderbereich kann wie folgt definiert werden: Er beginnt mit einer vorderen Fahrzeugbegrenzung und erstreckt sich in Fahrzeuglängsrichtung bis zumindest 2 m vor der Fahrzeugbegrenzung. Außerdem kann der Vorderbereich sich über eine Gesamtbreite der Fahrerkabine und seitlich 2 m über die Beifahrerseite hinaus erstrecken.

Es versteht sich, dass die Erfassungseinheit zumindest die definierten Bereiche (die Bodenbereiche und der Vorderbereich) erfasst, darüber hinaus aber noch andere Bereiche miterfassen kann. Die definierten Bereiche sollen also Minimalbereiche darstellen, die zumindest erfasst werden.

Die Bildverarbeitungseinheit kann ausgebildet sein, um eine Bildtranstransformation von Bilddaten von der ersten Kameraeinheit und/oder von der vierten Kameraeinheit durchzuführen, um Verzerrungen infolge des genutzten Objektives zu kompensieren. Hierdurch wird eine Redundanz erreicht, da die erste Kameraeinheit (und auch die vierte Kameraeinheit) auch einen rückwärts gerichteten Seitenbereich des Fahrzeuges erfassen, der ebenfalls von der zweiten Kameraeinheit (und auch von der dritten Kameraeinheit) erfasst wird. Durch die Bildtransformationen werden die erfassten Bilder vergleichbar.

Optional umfasst das Kameraüberwachungssystem zumindest eine Anzeigeeinheit mit zumindest einem ersten Abschnitt zur Darstellung des ersten Bodenbereiches und einem zweiten Abschnitt zur Darstellung des zweiten Bodenbereiches. Auch der dritte Bodenbereich und/oder der Vorderbereich kann in einem eigenen Abschnitt der Anzeigeeinheit angezeigt werden. Es ist ebenfalls möglich, dass mehrere Anzeigeeinheiten vorgesehen sind. So können zum Bespiel separate Anzeigen für die Beifahrerseite und die Fahrerseite vorhanden sein, um unabhängig die Seiten des Fahrzeuges zu überwachen.

Optional ist die Bildauswerteeinheit ausgebildet, um in den erfassten Bilddaten zumindest eine der folgenden Umgebungsinformationen zu verifizieren (oder zu erkennen oder zu identifizieren) und entsprechende Resultate bereitzustellen:
- eine Fahrbahnmarkierung;
- ein Objekt (z.B. ein Baum, einen Gehweg, einen Fahrradweg, ein Fußgänger etc.);
- ein anderes Fahrzeug;
- einen Straßenrand.

Damit wird es beispielsweise möglich, eine Spurverfolgung oder ein Fahrerassistenzsystem oder ein autonomes Fahren zu unterstützen. Insbesondere kann hierfür die erste Kameraeinheit und/oder die vierte Kameraeinheit genutzt werden, die beide beispielsweise vertikal nach unten (auf die Fahrbahn) ausgerichtet werden können und somit die genannten Umgebungsinformationen deutlich erfassen können, selbst wenn weitere Fahrzeuge oder andere Objekte in der näheren Umgebung sich befinden und einen horizontalen Blick blockieren.

Die vorliegende Erfindung bezieht sich auch auf ein Fahrzeug, insbesondere auf ein Nutzfahrzeug, das ein zuvor beschriebenes Kameraüberwachungssystem aufweist.

Die vorliegende Erfindung bezieht sich auch auf ein Verfahren zur Unterstützung eines Fahrerassistenzsystems oder eines autonomen Fahrens eines Fahrzeuges. Das Verfahren umfasst die Schritte:
- Auswerten von Bilddaten, die durch ein zuvor beschriebenes Kameraüberwachungssystem erfasst wurden;
- basierend darauf, Feststellen einer Umgebungsinformation des Fahrzeuges, wobei die Umgebungsinformation zumindest eines aus dem Folgenden umfasst: eine festgestellte Fahrbahnmarkierung, ein festgestellter Fahrbahnrand, ein festgestelltes anderes Fahrzeug, ein festgestelltes Objekt in der Umgebung des Fahrzeuges;
- Bereitstellen der Umgebungsinformation.

Die bereitgestellte Umgebungsinformation kann insbesondere für eine Spurverfolgung oder zur Orientierung genutzt werden.

Dieses Verfahren oder zumindest Teile davon kann/können ebenfalls in Form von Anweisungen in Software oder auf einem Computerprogrammprodukt implementiert oder gespeichert sein, wobei gespeicherte Anweisungen in der Lage sind, die Schritte nach dem Verfahren auszuführen, wenn das Verfahren auf einem Prozessor läuft. Daher bezieht sich die vorliegende Erfindung ebenfalls auf Computerprogrammprodukt mit darauf gespeichertem Software-Code (Softwareanweisungen), der ausgebildet ist, um eines der zuvor beschriebenen Verfahren auszuführen, wenn der Software-Code durch eine Verarbeitungseinheit ausgeführt wird. Die Verarbeitungseinheit kann jede Form von Computer oder Steuereinheit sein, die einen entsprechenden Mikroprozessor aufweist, der einen Software-Code ausführen kann.

Die Ausführungsbeispiele der vorliegenden Erfindung werden besser verstanden von der folgenden detaillierten Beschreibung und den beiliegenden Zeichnungen der unterschiedlichen Ausführungsbeispiele, die jedoch nicht so verstanden werden sollten, dass sie die Offenbarung auf die spezifischen Ausführungsformen einschränken, sondern lediglich der Erklärung und dem Verständnis dienen.
- Fig. 1: zeigt ein Kameraüberwachungssystem gemäß einem Ausführungsbeispiel der vorliegenden Erfindung.
- Fig. 2: zeigt weitere Details des Kameraüberwachungssystems gemäß weiterer Ausführungsbeispiele.
- Fig. 3A,3B: veranschaulichen Bodenbereiche, die gemäß Ausführungsbeispielen von der Erfassungseinheit gleichzeitig erfasst werden.
- Fig. 4A,4B: veranschaulichen weitere Bodenbereiche, die gemäß Ausführungsbeispielen von der Erfassungseinheit gleichzeitig erfasst werden.
- Fig. 5A,5B: zeigt eine Anzeige für Bodenbereiche aus den Fig. 3A, 3B.
- Fig. 6A,6B: zeigt eine beispielhafte Anzeige für Bodenbereiche aus den Fig. 4A, 4B.

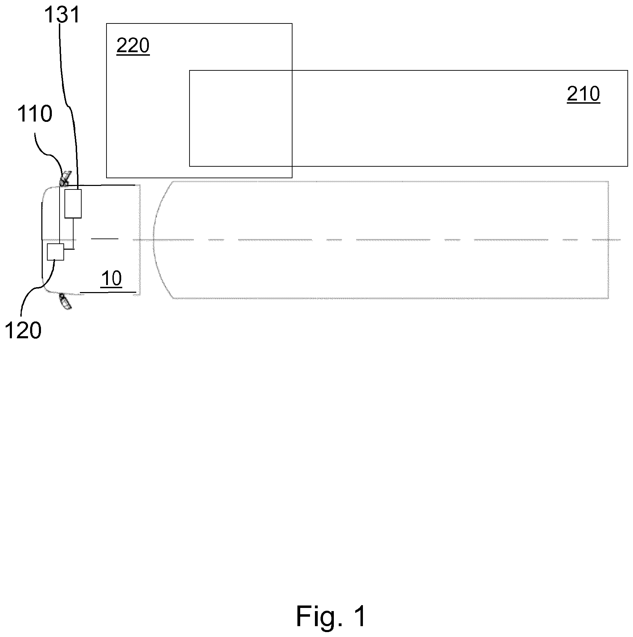

**Fig. 1** zeigt ein Kameraüberwachungssystem gemäß einem Ausführungsbeispiel der vorliegenden Erfindung. Es ist insbesondere geeignet zur Anwendung in Nutzfahrzeugen, aber auch für andere Fahrzeuge geeignet, um beispielsweise vorhandene Spiegelanordnungen zu ersetzen. Das Kameraüberwachungssystem umfasst eine Bilderfassungseinheit 110 zum gleichzeitigen Erfassen von Bilddaten zu einem ersten Bodenbereich 210 und zu einem zweiten Bodenbereich 220 auf zumindest einer Seite (insbesondere auf der Beifahrerseite) des beispielhaften Nutzfahrzeuges 10. Die Bilderfassungseinheit 110 ist beispielsweise eine geeignet angebrachte Kamera, die mit einer Aufnahme beide Bodenbereiche 210, 220 gleichzeitig erfasst. Außerdem umfasst das Kameraüberwachungssystem eine Bildauswerteeinheit 120, die ausgebildet ist, um Bilddaten zu dem ersten Bodenbereich 210 von Bilddaten zu dem zweiten Bodenbereich 220 zu separieren, um eine unabhängige Darstellung zu ermöglichen.

Optional umfasst das Kameraüberwachungssystem zumindest eine Anzeigeeinheit 131, um die erfassten Aufnahmen durch die Bilderfassungseinheit 110 bildlich darzustellen. Die Anzeigeeinheit 131 muss jedoch nicht Teil des Kameraüberwachungssystems sein. Es ist ebenfalls möglich, eine bereits vorhandene Anzeige hierfür zu nutzen.

Beispielsweise ist es möglich, den ersten Bodenbereich 210 in einem ersten Abschnitt der Anzeigeeinheit 131 darzustellen und den zweiten Bodenbereich 220 in einem anderen Abschnitt. Die Bilderfassungseinheit 110 ist im einfachsten Beispiel eine Kamera mit einem entsprechenden Objektiv (zum Beispiel einem Weitwinkelobjektiv), welches mehrere Bereiche gleichzeitig erfassen kann, ohne die Kamera bewegen zu müssen. Die mehreren Bereiche werden durch die Bildverarbeitungseinheit 120 getrennt, um die separate, gleichzeitige Darstellung auf der Anzeigeeinheit 131 zu ermöglichen. Die Bodenbereiche 210, 220 können aber auf der Anzeige aber auch durch Umschalten nacheinander angezeigt werden.

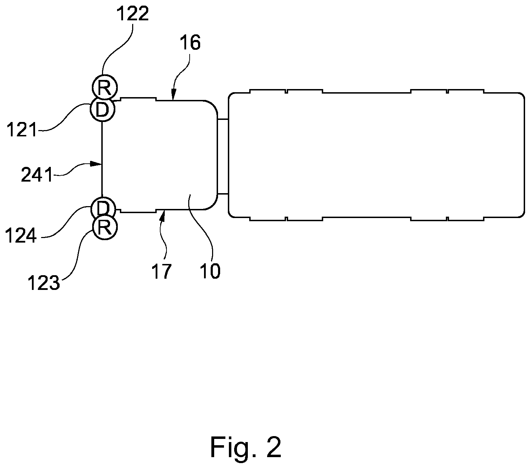

**Fig. 2** zeigt ein weiteres Ausführungsbeispiel für das Kameraüberwachungssystem, welches sich von dem in der Fig. 1 dargestellten System dadurch unterscheidet, dass die Bilderfassungseinheit 110 beispielhaft eine erste Kameraeinheit 121, eine zweite Kameraeinheit, eine dritte Kameraeinheit 123 und eine vierte Kameraeinheit 124 aufweist.

Die erste Kameraeinheit 121 und die zweite Kameraeinheit 122 sind beispielsweise ausgebildet, um in einem vorderen Eckbereich bzw. an einem Seitenbereich der Fahrerkabine (z.B. auf der Beifahrerseite 16) angebracht zu werden und um den seitlichen bzw. rückwärtigen Bereich des Nutzfahrzeuges unabhängig voneinander zu erfassen. Insbesondere erfasst die erste Kameraeinheit 121 auch einen Bodenbereich direkt vor und neben dem Nutzfahrzeug und den Seitenbereich hinter der Fahrerkabine. Um dies zu erreichen, kann die erste Kameraeinheit 121 ein entsprechendes Weitwinkelobjektiv wie z.B. ein Fischaugenobjektiv umfassen. Die zweite Kameraeinheit 122 erfasst einen seitlichen und rückwärtigen Bereich (ersten und zweiten Bodenbereich 210, 220) des beispielhaften Nutzfahrzeuges. Hierzu kann ein entsprechendes Weitwinkelobjektiv vorgesehen sein.

Außerdem ist auf der Fahrerseite 17 die dritte Kameraeinheit 123 und die vierte Kameraeinheit 124 vorgesehen, die in einem Eckbereich der Fahrerkabine 10 anbringbar sind. Die dritte Kameraeinheit 123 kann ähnlich oder gleich zur zweiten Kameraeinheit 122 ausgebildet sein und einen Seitenbereich neben bzw. hinter der Fahrerkabine 10 auf der Fahrerseite 17 erfassen. Die vierte Kameraeinheit 124 kann ähnlich oder gleich zur ersten Kameraeinheit 121 ausgebildet sein und einen Bodenbereich, der direkt an das Nutzfahrzeug angrenzt, erfassen. Um dies zu erreichen, kann auch die vierte Kameraeinheit 124 ein entsprechendes Weitwinkelobjektiv wie z.B. ein Fischaugenobjektiv umfassen.

Dies bietet den Vorteil, dass dadurch verschiedene Sensorbereiche und insbesondere Bodenbereiche um das Fahrzeug herum parallel erfasst werden. So können beispielsweise die erste Kameraeinheit 121 und die zweite Kameraeinheit 122 parallel den ersten und zweiten Bodenbereich 210, 220 seitlich neben bzw. hinter dem Nutzfahrzeug erfassen. Aufgrund dieser Redundanz sind Ausführungsbeispiele insbesondere für Nutzfahrzeuge geeignet, bei denen auf der Beifahrerseite eine visuelle Überprüfung durch den Fahrer im Allgemeinen nicht möglich ist.

Ausführungsbeispiele der vorliegenden Erfindung sind daher besonders geeignet, um gewöhnliche Spiegelanordnungen wie beispielsweise Rückspiegel von Nutzfahrzeuge zu ersetzen, wobei zusätzliche Funktionalitäten bereitgestellt werden.

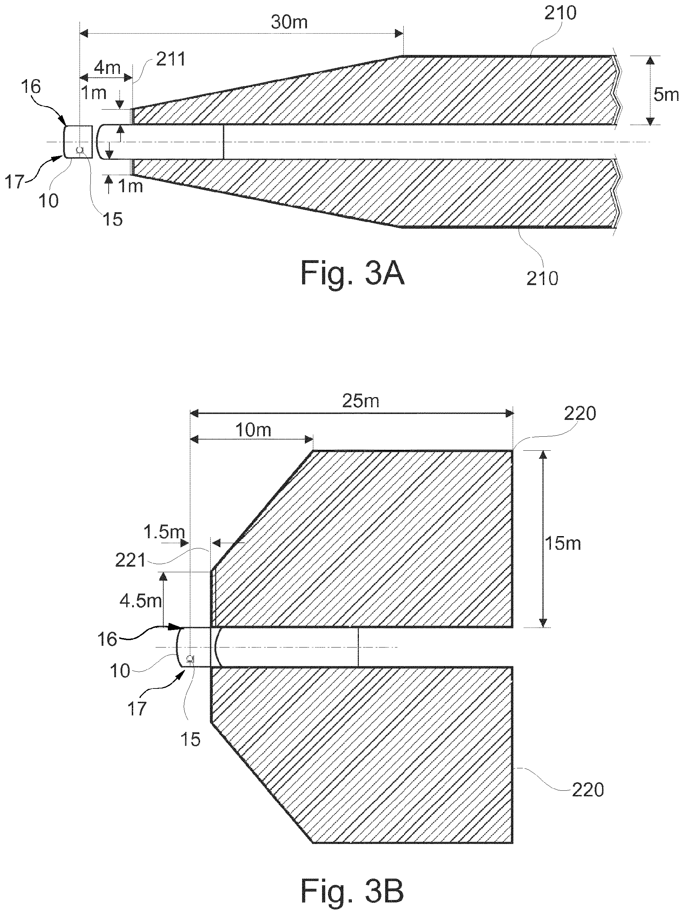

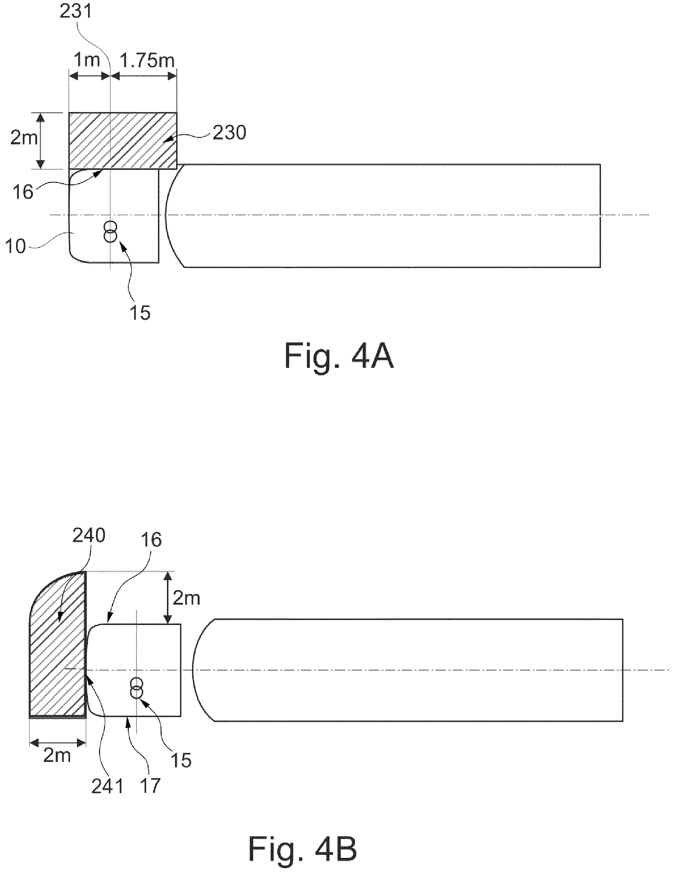

**Fig. 3A, Fig. 3B****,** **Fig. 4A** und **Fig. 4B** veranschaulichen die Bodenbereiche, die gemäß Ausführungsbeispielen zum Beispiel von den Kameraeinheiten 121, 122, 123, 124 als Seitenbereiche gleichzeitig erfasst werden. Hier und im Folgenden verstehen sich alle Längenangaben bis auf eine Toleranz von ± 10% oder ±5%. Außerdem sind folgenden Bodenbereiche Minimalbereiche, die zumindest erfasst werden. Es versteht sich, dass die Kameraeinheiten darüber hinaus weitere Bereiche erfassen werden.

Fig. 3A, 3B veranschaulichen den ersten Bodenbereich 210 und den zweiten Bodenbereich 220, die gemäß Ausführungsbeispielen von der zweiten und dritten Kameraeinheit 122, 123 auf ihrer jeweiligen Seite gleichzeitig erfasst werden.

Die Fig. 3A zeigt den ersten Bodenbereich 210, der sich beidseitig vom Fahrzeug erstreckt und wie folgt definiert werden kann: Er beginnt mit einer ersten Linie 211, die sich senkrecht zu einer Bewegungsrichtung des Nutzfahrzeuges erstreckt und um 4 m von einer Position 15 eines Fahrzeugführer (oder dessen Augenpunkte) nach hinten versetzt ist, und erstreckt sich mit einer variablen Breite seitlich parallel zu beiden Fahrzeugrändern 16, 17 nach hinten. Die variable Breite nimmt nach hinten bis zu einem Abstand von 26 m von der ersten Linie 211 linear von 1 m auf eine Breite von 5 m zu und bleibt dann konstant. Der erste Bodenbereich 210 umfasst somit eine Maximalbreite von ca. 5 m, wobei diese Maximalbreite in einem Abstand von ca. 30 m beginnend mit der Fahrerposition erreicht wird.

Die Fig. 3B zeigt den zweiten Bodenbereich 220, der sich beidseitig vom Fahrzeug erstreckt und wie folgt definiert werden kann: Der zweite Bodenbereich 220 beginnt mit einer zweiten Linie 221, die sich senkrecht zu einer Bewegungsrichtung des Nutzfahrzeuges erstreckt und um 1,5 m von einer Position 15 eines Fahrzeugführer (oder dessen Augenpunkte) nach hinten versetzt ist, und erstreckt sich mit einer variablen Breite seitlich parallel zu den Fahrzeugrändern 16, 17 auf eine Länge von 23,5 m nach hinten. Die variable Breite nimmt bis zu einem Abstand von 8,5 m von der zweiten Linie 221 linear von 4,5 m auf eine Breite von 15 m zu und bleibt dann nach hinten konstant. Er verbreitert sich somit von ca. 4,5 m bis auf eine Maximalbreite von 15 m, die in einem Abstand von ca. 10 m von der Fahrerposition erreicht wird.

Der erste Bodenbereich 210 aus der Fig. 3A stellt somit im Wesentlichen einen Sichtbereich nach hinten dar, während der zweite Bodenbereich 220 aus der Fig. 3B einen Seitensichtbereich darstellt, der beispielsweise für einen Spurwechsel wichtig ist, um z.B. zu erkennen, ob ein Fahrzeug in einer der benachbarten Spuren neben dem Fahrzeug vorhanden ist. Die zweite Kameraeinheit 122 (und analog die dritte Kameraeinheit 123 auf der Fahrerseite 16) dient in erster Linie zur Erfassung des ersten Bodenbereiches 210 und simultan des zweiten Bodenbereiches 220.

Fig. 4A, 4B veranschaulichen den dritten Bodenbereiche 230 und den Vorderbereich 240, die gemäß Ausführungsbeispielen in erster Linie von der ersten Kameraeinheit 121 auf der Beifahrerseite 16 (und analog von der vierten Kameraeinheit 124 auf der Fahrerseite 17) gleichzeitig erfasst werden.

Die Fig. 4A veranschaulicht den dritten Bodenbereich 230, der sich von einer dritten Linie 231, die senkrecht zu einer Bewegungsrichtung des Nutzfahrzeuges durch die Position 15 des Fahrers verläuft, um 1,75 m nach hinten und um ca. 1 m nach vorne erstreckt. Die Breite des dritten Bodenbereiches 230 ist ca. 2 m, gemessen von dem rechten Fahrzeugrand 16. In gleicher oder ähnlicher Weise wird der dritte Bodenbereich 230 für die Fahrerseite 17 definiert.

Die Fig. 4B zeigt einen vierten Bodenbereich 240 (Vorderbereich), der beispielhaft ebenfalls durch die erste Kameraeinheit 121 erfasst wird. Der vierte Bodenbereich 240 erstreckt sich beginnend mit der Vorderseite 241 der Fahrerkabine 10 über die Fahrzeugbreite bis zu einer Entfernung von ca. 2 m nach vorne und bis zu 2 m über den Fahrzeugrand 16 auf der Beifahrerseite hinaus. Optional ist der vierte Bodenbereich 240 an der vorderen rechten Ecke (von der Sicht des Fahrers aus) mit einem Krümmungsradius von ca. 2 m abgerundet. Der dritte Bodenbereich 230 und der vierte Bodenbereich 240 erfassen somit insbesondere Bereiche, die für Fahrzeugführer von Nutzfahrzeugen schlecht oder gar nicht einsehbar sind (im Gegensatz zu Personenkraftwagen).

Um eine Redundanz des Kameraüberwachungssystems zu erreichen, wird die erste Kameraeinheit 121 beispielsweise in einem oberen Eckbereich der Fahrerkabine 10 auf der Beifahrerseite 16 montiert, so dass die erste Kameraeinheit 121 den dritten Bodenbereich 230, den vierten Bodenbereich 240, den ersten Bodenbereich 210 und den zweiten Bodenbereich 220 erfassen kann. Um alle Bodenbereiche möglichst wirklichkeitsnah bildlich darstellen zu können, können beispielsweise Aufnahmen durch erste Kameraeinheit 121 (mit dem beispielhaften Fischaugenobjektiv) vom ersten Bodenbereich 210 und vom zweiten Bodenbereich 220 entsprechend verarbeitet werden bzw. transformiert werden, um mögliche Verzerrungen durch das Fischaugenobjektiv der ersten Kameraeinheit 121 zu beseitigen.

Auch auf der Fahrerseite ist die vierte Kameraeinheit 124 vorteilhafterweise eine Weitwinkel- oder Fischaugenkamera, die ebenfalls Bilddaten erfasst, die nach entsprechender Transformation geeignet sind, um den ersten und zweiten Bodenbereich 210, 220 zu erfassen und dem Fahrer möglichst unverzerrt bildlich darzustellen. Dazu kann die vierte Kameraeinheit 124 wiederum in einem oberen Eckbereich der Fahrerkabine 10 des Nutzfahrzeuges angebracht werden, so dass diese Kameraeinheit nicht nur den dritten Bodenbereich 230 und den vierten Bodenbereich 240 (vor der Fahrerkabine) erfassen kann, sondern auch den rückwärts gerichteten ersten Bodenbereich 210 und den zweiten Bodenbereich 220.

Die Entzerrung kann auch unter Nutzung von Nachschlagetabellen (sogenannte "lookup tables") vorgenommen werden, um das Bild für eine spezielle Anzeige, die in dem Fahrzeug bereits vorhanden ist, anzupassen.

Ausführungsbeispiele erlauben somit den Fahrer ständig die Kontrolle über das Geschehen sowohl auf der linken Fahrzeugseite als auch auf der rechten Fahrzeugseite zu behalten. Um eine gute Abdeckung durch die Kameraeinheiten zu gewährleisten, können beispielsweise Kameraeinheit mit einer hohen Auflösung und einem Weitwinkelobjektiv genutzt werden. Im Vergleich zu konventionellen Spiegelanordnungen bieten solche Kamerasysteme eine sehr hohe Flexibilität, da Kamerabilder separat auf verschiedenen Abschnitten eines eine Anzeige angezeigt werden können. Es ist beispielsweise möglich, eine Anzeige aufzuteilen, um die verschiedenen Bodenbereiche separat darzustellen.

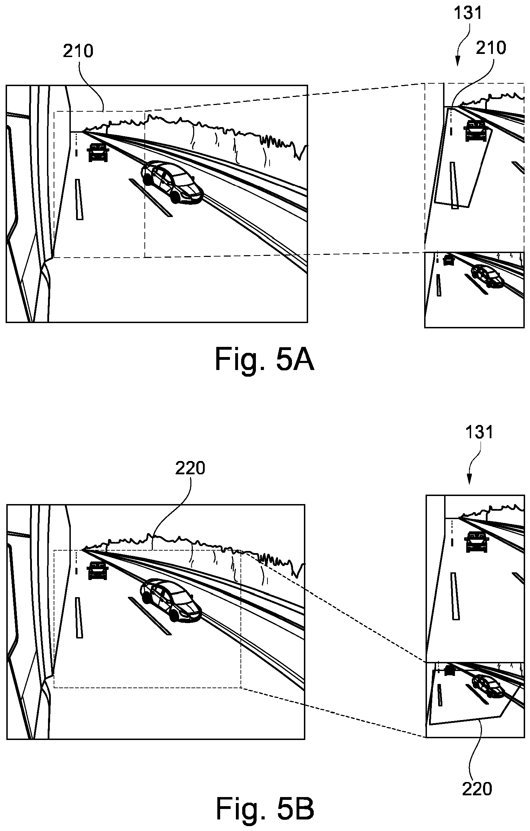

Die **Fig. 5A** und **Fig. 5B** zeigen beispielhaft, wie ein erfasstes Bild von der Fahrerseite (auf der linken Seite) auf der entsprechende Anzeigeeinheit 131 dargestellt werden kann. In der Fig. 5A ist beispielhaft der erste Bodenbereich 210 hervorgehoben, der beispielsweise in einem oberen Bereich der Anzeigeeinheit 131 dargestellt wird. Die Fig. 5B zeigt den zweiten Bodenbereich 220, der beispielsweise auf der Anzeigeeinheit 131 in einem unteren Bereich dargestellt wird.

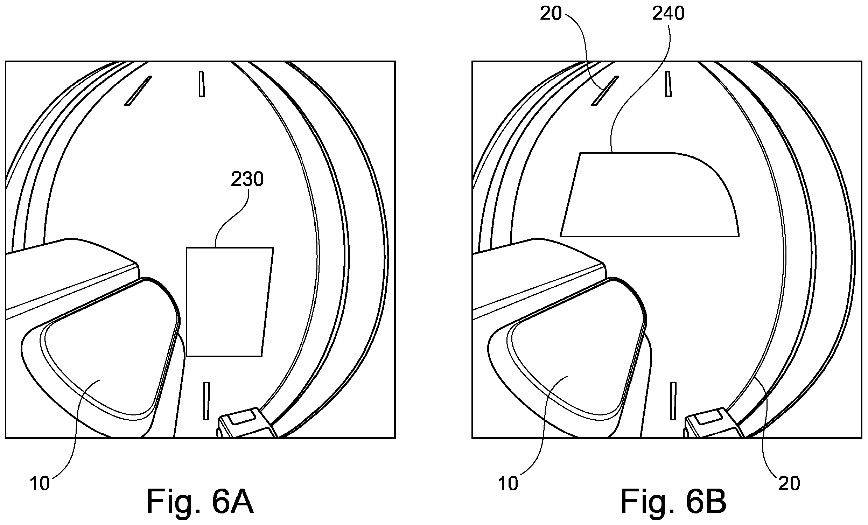

Die **Fig. 6A** zeigt beispielhaft ein erfasstes Bild von dem dritten Bodenbereich 230, wie er durch die erste Kameraeinheit 121 auf der Beifahrerseite 16 erfasst wird. Die **Fig. 6B** zeigt beispielhaft den Vorderbereich 240, wie er z.B. durch die erste Kameraeinheit 121 von der Beifahrerseite 16 aus erfasst wird. Beide erfassten Bereiche 230, 240 können in ähnlicher Weise bildlich dargestellt werden, wie der erste Bodenbereich 210 und der zweite Bodenbereich 220 (siehe Fig. 5A, 5B).

Die erste Kameraeinheit 121 (und ähnlich die vierte Kameraeinheit 124) umfasst beispielhaft ein Fischaugenobjektiv und ist in einem Eckbereich der Fahrzeugkabine, zum Beispiel auf der Beifahrerseite 16 angeordnet. Auf diese Weise können sowohl der dritte Bodenbereich 230 als auch der Vorderbereich 240 erfasst werden. Die erste und dritte Kameraeinheit 121, 124 sind dazu vertikal nach unten gerichtet und können aufgrund des Fischaugenobjektivs auch Bereiche in der Horizontale erfassen (d.h. den ersten und zweiten Bodenbereich 210, 220). Es ist von Vorteil, wenn diese Fischaugenkameras 121, 124 eine möglichst hohe Auflösung aufweisen, um nach einer Entzerrung (Bildtransformation) der erfassten Bilder noch viele Details erkennen zu können. Daher kann die erste Kameraeinheit 121 und/oder die vierte Kameraeinheit 124 eine größere Auflösung aufweisen als zum Beispiel die zweite Kameraeinheit 122 und/oder die dritte Kameraeinheit 123.

Die gezeigten Fahrbahnmarkierungen 20 (siehe z.B. Fig. 6B) kann durch jede der genannten Kameraeinheiten 121, 122, 123, 124 erfasst oder detektiert werden. Aufgrund der definierten Bodenbereiche sind die Fahrbahnmarkierungen 20 oder andere Objekte durch das Kameraüberwachungssystem nahezu immer detektierbar. Im Gegensatz zu konventionellen Systemen, die nach vorne oder direkt nach hinten gerichtet sind, kann die Sicht bei Ausführungsbeispielen der vorliegenden Erfindung nicht durch andere Objekte (wie z.B. Fahrzeuge) blockiert werden. Insbesondere die Fischaugenkameras (erste oder vierte Kameraeinheit 121, 124) sind geeignet, um die Fahrbahnmarkierungen 20 und/oder Objekte in einer Umgebung des Fahrzeuges zu detektieren, da sie den Bodenbereich nach allen Seiten erfassen. Die Fahrbahnmarkierungen 20 oder andere Strukturen auf der Fahrbahn in der Nähe des Fahrzeuges können aber unter Nutzung der nach hinten gerichteten zweiten und/oder dritten Kameraeinheit 122, 123 erkannt und kontinuierlich verfolgt werden.

Daher können Ausführungsbeispiele auch in Fahrerassistenzsystem oder beim autonomen Fahren zum Einsatz kommen, um über zusätzliche Algorithmen eine Detektion von Fahrbahnmarkierungen 20 oder von Objekten in der Umgebung des Fahrzeuges zu übernehmen.

Ausführungsbeispiele der vorliegenden Erfindung beziehen sich insbesondere auch auf die folgenden Gegenstände:
Ein Kameraüberwachungssystem für ein Nutzfahrzeug, dass zumindest eine nach hinten gerichtete Weitwinkelkamera 122, 123 umfasst, die den ersten Bodenbereich 210 und den zweiten Bodenbereich 220 abdeckt.

Gemäß weiterer vorteilhafter Ausführungsformen umfasst das Kameraüberwachungssystem zumindest zwei nach hinten gerichtete Weitwinkelkameras 122, 123, die auf der rechten und linken Seite des Fahrzeuges montiert werden können.

Gemäß weiterer vorteilhafter Ausführungsformen umfasst das Kameraüberwachungssystem zumindest eine nach unten gerichtete Fischaugenkamera 121, die auf der Beifahrerseite 16 angebracht werden kann, um einen Vorderbereich 240 und einen dritten Bodenbereich 230 zu erfassen.

Gemäß weiterer vorteilhafter Ausführungsformen umfasst das Kameraüberwachungssystem eine zusätzliche nach unten gerichtete Fischaugenkamera 124 auf der Fahrerseite 17 der Fahrerkabine 10, um weitere ähnliche Funktionalitäten, wie auf der Beifahrerseite 16 bereitzustellen. Damit kann auch auf der Fahrerseite 17 der erste Bodenbereich 210 und der zweite Bodenbereich 220 erfasst werden.

Gemäß weiterer vorteilhafter Ausführungsformen können die Bilder, die durch das Kameraüberwachungssystem erfasst werden, zum Beispiel durch die nach hinten gerichteten Weitwinkelkameras 122, 123, für eine Detektion von Fahrbahnmarkierungen 20 und/oder für eine Objektdetektionen genutzt werden.

Gemäß weiterer vorteilhafter Ausführungsformen kann die nach unten gerichtete Fischaugenkamera 121, 124 genutzt werden, um die Fahrbahnmarkierungen 20 zu erkennen und/oder Objekte zu detektieren.

Ausführungsbeispiele umfassen somit auch ein Verfahren zur Nutzung des Kameraüberwachungssystems. Dieses Verfahren oder diese Verfahrensschritte kann/können ebenfalls Computer-implementiert sein, d.h. es kann durch Anweisungen umgesetzt sein, die auf einem Speichermedium gespeichert sind und in der Lage sind, die Schritte des Verfahrens auszuführen, wenn es auf einem Prozessor läuft. Die Anweisungen umfassen typischerweise eine oder mehrere Anweisungen, die auf unterschiedliche Art auf unterschiedlichen Medien in oder peripher zu einer Steuereinheit (mit einem Prozessor) gespeichert sein können, die, wenn sie gelesen und durch die Steuereinheit ausgeführt werden, die Steuereinheit dazu veranlassen, Funktionen, Funktionalitäten und Operationen auszuführen, die zum Ausführen eines Verfahrens gemäß der vorliegenden Erfindung notwendig sind.

Die in der Beschreibung, den Ansprüchen und den Figuren offenbarten Merkmale der Erfindung können sowohl einzeln als auch in beliebiger Kombination für die Verwirklichung der Erfindung wesentlich sein.

### BEZUGSZEICHENLISTE

- 10: Fahrerkabine
- 15: Fahrerposition (Augenpositionen)
- 16: Beifahrerseite (Fahrzeugrand an Beifahrerseite)
- 17: Fahrerseite
- 20: Fahrbahnmarkierungen
- 110: Bilderfassungseinheit(en)
- 120: Bildverarbeitungseinheit
- 121,122, ...: Kameraeinheiten
- 131: Anzeigeeinheit(en)
- 210,220, ...: Bodenbereich
- 211,121, ...: vordere Bezugslinien (erste Linie, zweite Linie, ...)
- 241: vorderer Fahrzeugrand/Fahrzeugbegrenzung

## Patentansprüche

1. Kameraüberwachungssystem für einen Seitenbereich eines Fahrzeuges, das Kameraüberwachungssystem umfasst:
eine Bilderfassungseinheit (110) zum gleichzeitigen Erfassen von Bilddaten zu einem ersten Bodenbereich (210) und zu einem zweiten Bodenbereich (220) auf zumindest einer Seite des Fahrzeuges; und
eine Bildauswerteeinheit (120), die ausgebildet ist, um Bilddaten zu dem ersten Bodenbereich (210) von Bilddaten zu dem zweiten Bodenbereich (220) zu separieren, um eine unabhängige Darstellung zu ermöglichen,
**dadurch gekennzeichnet, dass**
die Bilderfassungseinheit (110) folgende Kameraeinheiten (121, 122, 123, 124) aufweist:
- eine erste Kameraeinheit (121) mit einem Fischaugenobjektiv, um bei Anbringung an einem vorderen Eckbereich des Fahrzeuges auf der Beifahrerseite (16) gleichzeitig einen Vorderbereich (240) vor dem Fahrzeug, den ersten Bodenbereich (210), den zweiten Bodenbereich (220) und einen dritten Bodenbereich (230) zu erfassen;
- eine zweite Kameraeinheit (122) zur Erfassung von Bilddaten auf einer Beifahrerseite (16) des Fahrzeuges;
- eine dritte Kameraeinheit (123) zur Erfassung von Bilddaten auf einer Fahrerseite (17) des Fahrzeuges;
- eine vierte Kameraeinheit (124) mit einem Fischaugenobjektiv, um bei Anbringung an einem vorderen Eckbereich des Fahrzeuges auf der Fahrerseite gleichzeitig den Vorderbereich (240), den ersten Bodenbereich (210), den zweiten Bodenbereich (220) und einen dritten Bodenbereich (230) zu erfassen.

2. Kameraüberwachungssystem nach Anspruch 1,
**dadurch gekennzeichnet, dass**
der erste Bodenbereich (210) wie folgt definiert ist:
beginnend mit einer ersten Linie (211), die sich senkrecht zu einer Bewegungsrichtung des Fahrzeuges erstreckt und um 4 m von einer Position (15) eines Fahrzeugführer nach hinten versetzt ist, erstreckt sich der erste Bodenbereich (210) mit einer variablen Breite seitlich parallel zu einem Fahrzeugrand (16, 17) nach hinten, wobei die variable Breite bis zu einem Abstand von 26 m von der ersten Linie (211) linear von 1 m auf eine Breite von 5 m zunimmt und dann konstant bleibt; und
der zweite Bodenbereich (220) wie folgt definiert ist:
beginnend mit einer zweiten Linie (221), die sich senkrecht zu einer Bewegungsrichtung des Fahrzeuges erstreckt und um 1,5 m von einer Position (15) eines Fahrzeugführer nach hinten versetzt ist, erstreckt sich der zweite Bodenbereich (210) mit einer variablen Breite seitlich parallel zu einem Fahrzeugrand (16, 17) auf eine Länge von 23,5 m nach hinten, wobei die variable Breite bis zu einem Abstand von 8,5 m von der zweiten Linie (221) linear von 4,5 m auf eine Breite von 15 m zunimmt und dann konstant bleibt.

3. Kameraüberwachungssystem nach Anspruch 1 oder Anspruch 2,
**dadurch gekennzeichnet, dass**
die Bildauswerteeinheit (120) ausgebildet ist, um Verzerrungen in den erfassten Bilddaten, insbesondere in Aufnahmen mittels der Fischaugenobjektive, zu kompensieren.

4. Kameraüberwachungssystem nach einem der Ansprüche 1 bis 3,
**dadurch gekennzeichnet, dass**
der dritte Bodenbereich (230) wie folgt definiert ist:
beginnend mit einer dritten Linie (231), die sich senkrecht zu einer Bewegungsrichtung des Fahrzeuges durch eine Position eines Fahrzeugführers (15) erstreckt, erstreckt sich der dritte Bodenbereich (230) 1,75 m nach hinten und 1 m nach vorne auf einer Breite von 2 m parallel zu einem Fahrzeugrand (16, 17); und
der Vorderbereich (240) wie folgt definiert ist:
beginnend mit einer vorderen Fahrzeugbegrenzung (241) erstreckt sich der Vorderbereich (240) in Fahrzeuglängsrichtung bis zumindest 2 m über eine Gesamtbreite der Fahrerkabine (10) und seitlich 2 m über die Beifahrerseite (17) hinaus.

5. Kameraüberwachungssystem nach einem der vorhergehenden Ansprüche,
**gekennzeichnet durch**
zumindest eine Anzeigeeinheit (131) mit zumindest einem ersten Abschnitt zur Darstellung des ersten Bodenbereiches (210) und einem zweiten Abschnitt zur Darstellung des zweiten Bodenbereiches (220).

6. Kameraüberwachungssystem nach einem der vorhergehenden Ansprüche,
**dadurch gekennzeichnet, dass**
die Bildauswerteeinheit (120) ausgebildet ist, um in den erfassten Bilddaten zumindest eine der folgenden Umgebungsinformationen zu verifizieren und bereitzustellen:
- eine Fahrbahnmarkierung (20);
- ein Objekt;
- ein anderes Fahrzeug;
- einen Straßenrand.

7. Nutzfahrzeug,
**gekennzeichnet durch**
ein Kameraüberwachungssystem nach einem der vorhergehenden Ansprüche.

8. Verfahren zur Unterstützung eines Fahrerassistenzsystems oder eines autonomen Fahrens eines Fahrzeugs,
**gekennzeichnet durch**
- Auswerten von Bilddaten, die durch ein Kameraüberwachungssystem nach einem der Ansprüche 1 bis 6 erfasst wurden;
- basierend darauf, Feststellen einer Umgebungsinformation des Fahrzeuges, wobei die Umgebungsinformation zumindest eines aus dem Folgenden umfasst: eine festgestellte Fahrbahnmarkierung, ein festgestellter Fahrbahnrand, ein festgestelltes anderes Fahrzeug, ein festgestelltes Objekt in der Umgebung des Fahrzeuges;
- Bereitstellen der Umgebungsinformation.

9. Computerprogrammprodukt mit darauf gespeicherter Software, die ausgebildet ist, um das Verfahren nach Anspruch 8 auszuführen, wenn die Software auf einer Datenverarbeitungseinheit ausgeführt wird.

## Claims

1. Camera monitoring system for a side region of a vehicle, the camera monitoring system comprising:
an image capture unit (110) for the simultaneous capture of image data for a first ground region (210) and for a second ground region (220) on at least one side of the vehicle; and
an image analysis unit (120) that is designed to separate image data for the first ground region (210) from image data for the second ground region (220) to enable an independent display,
**characterized in that**
the image capture unit (110) comprises the following camera units (121, 122, 123, 124):
- a first camera unit (121) with a fish-eye lens to simultaneously capture a front region (240) in front of the vehicle, the first ground region (210), the second ground region (220) and a third ground region (230) when attached to a front corner of the vehicle on the passenger side (16);
- a second camera unit (122) for capturing image data on a passenger side (16) of the vehicle;
- a third camera unit (123) for capturing image data on a driver side (17) of the vehicle;
- a fourth camera unit (124) with a fish-eye lens to simultaneously capture the front region (240), the first ground region (210), the second ground region (220) and a third ground region (230) when attached to a front corner of the vehicle on the driver side.

2. Camera monitoring system according to Claim 1,
**characterized in that**
the first ground region (210) is defined as follows:
starting with a first line (211) which extends perpendicularly to a direction of movement of the vehicle and is offset rearwards by 4 m from a position (15) of a driver, the first ground region (210) extends rearwards laterally parallel to a vehicle edge (16, 17) with a variable width, wherein the variable width increases linearly from the first line (211) from 1 m to a width of 5 m up to a distance of 26 m and then remains constant; and
the second ground region (220) is defined as follows:
starting with a second line (221) which extends perpendicularly to a direction of movement of the vehicle and is offset rearwards by 1.5 m from a position (15) of a driver, the second ground region (210) extends to a length of 23.5 m rearwards laterally parallel to a vehicle edge (16, 17) with a variable width, wherein the variable width increases linearly from the second line (221) from 4.5 m to a width of 15 m up to a distance of 8.5 m and then remains constant.

3. Camera monitoring system according to Claim 1 or Claim 2,
**characterized in that**
the image analysis unit (120) is designed to compensate for distortions in the captured image data, in particular in images by means of the fish-eye lens.

4. Camera monitoring system according to one of Claims 1 to 3,
**characterized in that**
the third ground region (230) is defined as follows:
starting with a third line (231) which extends perpendicularly to a direction of movement of the vehicle through a position of a driver (15), the third ground region (230) extends parallel to a vehicle edge (16, 17) rearwards by 1.75 m and forwards by 1 m at a width of 2 m; and
the front region (240) is defined as follows:
starting with a front vehicle boundary (241), the front region (240) extends in the longitudinal direction of the vehicle up to at least 2 m over the entire width of the driver's cab (10) and sideways by 2 m beyond the passenger side (17).

5. Camera monitoring system according to any one of the preceding claims,
**characterized by**
at least one display unit (131) with at least a first section for displaying the first ground region (210) and a second section for displaying the second ground region (220) .

6. Camera monitoring system according to any one of the preceding claims,
**characterized in that**
the image analysis unit (120) is designed to verify and provide at least one of the following environment information items in the captured image data:
- a road marking (20);
- an object;
- another vehicle;
- a roadside.

7. Commercial vehicle,
**characterized by**
a camera monitoring system according to any one of the preceding claims.

8. Method for supporting a driver assistance system or autonomous driving of a vehicle,
**characterized by**
- analysing image data captured by a camera monitoring system according to one of Claims 1 to 6;
- based thereon, identifying environment information of the vehicle, wherein the environment information includes at least one of the following: a detected road marking, a detected roadside, a detected other vehicle, a detected object in the environment of the vehicle;
- providing the environment information.

9. Computer program product with software stored therein, which is designed to perform the method according to Claim 8 when the software is run on a data processing unit.

## Revendications

1. Système de surveillance par caméra d'une zone latérale à un véhicule, le système par surveillance par caméra comprenant :
une unité (110) de saisie d'image pour la saisie simultanée de données d'image d'une première zone (210) du sol et du deuxième zone (220) du sol au moins d'un côté du véhicule ; et
une unité (120) d'analyse d'image, qui est constituée pour séparer des données d'image de la première zone (210) du sol de données d'image de la deuxième zone (220) du sol, afin de rendre possible une représentation indépendante,
**caractérisé en ce que**
l'unité (110) de saisie d'image a des unités (121, 122, 123, 124) de caméra suivantes :
- une première unité (121) de caméra ayant un objectif grand angle extrême, afin de saisir, lorsqu'elle est montée sur une zone de coin avant du véhicule du côté (16) du passager à côté du conducteur, en même temps ? une zone (240) avant en avant du véhicule, la première zone (210) du sol, la deuxième zone (220) du sol et une troisième zone (230) du sol ;
- une deuxième unité (122) de caméra pour la saisie de données d'image d'un côté du passager à côté (16) du conducteur du véhicule ;
- une troisième unité (123) de caméra pour la saisie de données d'image d'un côté (17) du conducteur du véhicule ;
- une quatrième unité (124) de caméra ayant un objectif grand angle extrême, afin de saisir, lorsqu'elle est montée sur une zone de coin avant du véhicule du côté du conducteur, en même temps, la zone (240) avant, la première zone (210) du sol, la deuxième zone (220) du sol et une troisième zone (230) du sol.

2. Système de surveillance par caméra suivant la revendication 1,
**caractérisé en ce que**
la première zone (210) du sol est définie de la manière suivante :
en commençant par une première ligne (211), qui s'étend perpendiculairement à une direction de déplacement du véhicule et qui est décalée vers l'arrière de 4 m d'une position (15) d'un conducteur du véhicule, la première zone (210) du sol s'étend vers l'arrière en ayant une largeur variable, latéralement parallèlement à un bord (16, 17) du véhicule, la largeur variable augmentant jusqu'à une distance de 26 m de la première ligne (211) linéairement de 1 m à une largeur de 5 m, puis restant constante ; et
la deuxième zone (220) du sol est définie de la manière suivante :
en commençant par une deuxième ligne (221), qui s'étend perpendiculairement à une direction de déplacement du véhicule et qui est décalée vers l'arrière de 1,5 m d'une position (15) d'un conducteur du véhicule, la deuxième zone (210) du sol s'étend vers l'arrière en ayant une largeur variable, latéralement parallèlement à un bord (16, 17) du véhicule sur une longueur de 23,5 m, la largeur variable augmentant jusqu'à une distance de 8,5 m de la deuxième ligne (221) linéairement de 4,5 m à une largeur de 15 m, puis restant constante.

3. Système de surveillance par caméra suivant la revendication 1 ou revendication 2,
**caractérisé en ce que**
l'unité (120) d'analyse d'image est constituée pour compenser des distorsions dans les données d'image saisies, notamment dans des enregistrements au moyen des objectifs grand angle extrême.

4. Système de surveillance par caméra suivant l'une des revendications 1 à 3,
**caractérisé en ce que**
la troisième zone (230) du sol est définie de la manière suivante :
en commençant par une troisième ligne (231), qui s'étend perpendiculairement à une direction de déplacement du véhicule, en passant par une position d'un conducteur (15) du véhicule, la troisième zone (230) du sol s'étend de 1,75 m vers l'arrière et de 1 m vers l'avant sur une largeur de 2 m parallèlement à un bord (16, 17) du véhicule ; et
la zone (240) avant est définie de la manière suivante :
en commençant par une délimitation (241) avant du véhicule, la zone (240) avant s'étend dans la direction longitudinale du véhicule jusqu'à au moins 2 m au-delà d'une largeur totale de la cabine (10) du conducteur et latéralement au-delà de 2 m du côté (17) du passager à côté du conducteur.

5. Système de surveillance par caméra suivant l'une des revendications précédentes,
**caractérisé par**
une unité (131) d'affichage ayant au moins une première partie de représentation de la première zone (210) du sol et une deuxième partie de représentation de la deuxième zone (220) du sol.

6. Système de surveillance par caméra suivant l'une des revendications précédentes,
**caractérisé en ce que**
l'unité (120) d'analyse d'image est constituée pour vérifier, dans les données d'image, saisies au moins l'une des informations d'environnement suivantes et les mettre à disposition :
- un repérage (20) de voie de circulation ;
- un objet ;
- un autre véhicule ;
- un bord de voie.

7. Véhicule utilitaire,
**caractérisé par**
un système de surveillance par caméra suivant l'une des revendications précédentes.

8. Procédé pour venir au soutien d'un système d'assistance au conducteur ou d'une circulation autonome d'un véhicule,
**caractérisé par**
- analyse de données d'image, qui ont été saisies par un système de surveillance par caméra suivant l'une des revendications 1 à 6 ;
- sur cette base, constatation d'une information d'environnement du véhicule, dans lequel l'information d'environnement comprend l'une de ce qui suit :
une constatation d'un marquage de voie circulation, une constatation d'un bord de voie de circulation, une constatation d'un autre véhicule, une constatation d'un objet dans l'environnement du véhicule ;
- mise à disposition de l'information d'environnement.

9. Produit de programme d'ordinateur, sur lequel est mis en mémoire un logiciel, qui est constitué pour exécuter le procédé suivant la revendication 8, lorsque le logiciel est réalisé sur une unité de traitement de données.
